(19) **Europäisches Patentamt European Patent Office Office européen des brevets**

(11) **EP 1 617 601 B1**

(12) **EUROPEAN PATENT SPECIFICATION**

(45) Date of publication and mention of the grant of the patent:
**03.04.2013 Bulletin 2013/14**

(51) Int Cl.:
*G01S 5/02* (2010.01)  *H04L 12/28* (2006.01)

(21) Application number: **05075907.5**

(22) Date of filing: **18.04.2005**

(54) **Distributed precision based localization algorithm for ad-hoc wireless networks**

Verteiltes präzises Positionsbestimmungsverfahren für ad-hoc drahtlose Netzwerke

Algorithme distribué de localisation de précision pour les réseaux sans fil ad-hoc

(84) Designated Contracting States:
**AT BE BG CH CY CZ DE DK EE ES FI FR GB GR HU IE IS IT LI LT LU MC NL PL PT RO SE SI SK TR**

(30) Priority: **20.04.2004 EP 04076170**

(43) Date of publication of application:
**18.01.2006 Bulletin 2006/03**

(73) Proprietor: **Ambient Holding B.V.**
**7521 PV Enschede (NL)**

(72) Inventors:
• **Havinga, Paul Johannes Mattheus**
**7597 LW Saasveld (NL)**
• **Evers, Leon**
**8017 KH Zwolle (NL)**
• **Van Hoesel, Lodewijk Frans Willem**
**7523 ZL Enschede (NL)**
• **Octavian, Stefan**
**7523 DM Enschede (NL)**

(74) Representative: **Verdijck, Gerardus et al**
**Arnold & Siedsma**
**Sweelinckplein 1**
**2517 GK Den Haag (NL)**

(56) References cited:
**US-A- 5 317 323**

• **PATWARI N ET AL: "RELATIVE LOCATION IN WIRELESS NETWORKS" CONNECTING THE MOBILE WORLD : PROCEEDINGS / IEEE VTS 53RD VEHICULAR TECHNOLOGY CONFERENCE, SPRING, 2001; [IEEE VEHICULAR TECHNOLGY CONFERENCE], IEEE SERVICE CENTER, USA LNKD- DOI: 10.1109/VETECS.2001.944560, vol. CONF. 53, 6 May 2001 (2001-05-06), pages 1149-1153, XP001067140 ISBN: 978-0-7803-6728-9**

**Description**

Background of the invention

The present invention generally relates to the field of mobile computing, hand-held computers, wireless communication and wireless sensor networks. This invention can be used in any kind of ad-hoc networks that are equipped with means of measuring the distances between the nodes (e.g. the intensity of the received signal strength, ultrasound distance measurement devices, etc.). The invention however is most suitable for devices that communicate using a radio transceiver that has the capability to indicate the received signal strength during reception of a message from an other device. For example, the received signal strength can be an indication of the distance of the sending node to the receiving node. This distance estimate is then utilized in the present algorithm to estimate the position of a device. A typical environment for this algorithm is a wireless sensor network, where the individual nodes are resource poor (in terms of processor performance, and available memory), and wirelessly connected. The algorithm has a low complexity and has low memory and low processing requirements, and can operate with local knowledge only (thus a distributed algorithm).

Patwari et al, "Relative location in wireless networks", "Connecting the mobile world: proceedings / IEEE VTS 53RD Vehicular Technology Conference", Spring 2001, discloses a location mapping algorithm that estimates the locations of devices in a wireless network based on range estimates using a maximum likelihood method.

US 5317323 A discloses a system for locating a mobile cellular radio using triangulation and comprising a device for removing multipath and cochannel interference.

Sensors and control devices, that can measure anything from temperature to air flows, have found their way into a wide range of applications, such as security and quality control in manufacturing. Much of the cost of deploying sensing and control devices was in installing the network to connect them. In particular for networking applications that have hundreds or even thousands of I/O points, the cost of installation, wiring, and maintenance becomes a limiting factor in system design. A solution for this is a system with devices that form self-organizing wireless networks enabling the communication between sensors or other control devices without the need for human administration and with very low power consumption. Knowing the location of a device permits the system to know where things are, to provide location context, and opens a new class and wide range of applications.

Low cost portable computing devices such as handheld or palm-sized computers are widely available. Such devices can support local communication between nearby computers, or more generally can support wireless network or internet work communications. As will be appreciated, flexibility and utility of various applications can be enhanced if the precise spatial location of the portable computing device is known. Knowing the location of the portable computing device (with a precision of several meters or so) permits construction of user specific maps, transfer of location information to others, and receipt of location information for nearby computational or real world resources (e.g. answering such questions as "where is the nearest printer" or "where is the nearest coffee shop"). For this reason, having easily determinable and reliable position information is a useful feature.

However, spatial localization with low cost devices can be difficult. Devices incorporating GPS receivers often do not work indoors because of poor radio reception, consume a lot of energy, and can require a substantial amount of time to determine position with a required accuracy. In many areas, there may not be any differential GPS availability to gain the necessary meter level precision for greatest utility. Other wireless schemes for localizing spatial position are generally not sufficiently precise, or too expensive.

There have been a large number of inventions published in the area of localization systems that try to avoid these limitations. We can classify these systems in two categories. The first category includes the systems where the infrastructure detects the object and computes its position. As examples we can cite an electromagnetic system for detection of a passive tag within a room (described in United States Invention 6,542,083 - Richley et al, April 1, 2003), a multiple pass location processing method (United States Invention 6,603,428 - Stilp, August 5, 2003) and a system for monitoring the position of at least one portion of an object based on magnetic fields detection (United States Invention 6,316,934 - Amorai-Moriya et al., November 13, 2001). The second category includes systems where the object itself determines its own position by inspecting the existing infrastructure. Examples include a system with uniquely identifiable beacons placed in the environment [United States Invention 6,259,991 - Nysen, July 10, 2001] and an infrared beacon positioning system [United States Invention 6,292,744 - Want et al, September 18, 2001]. Also radio systems for locating mobile devices are described. The infrastructure determines the position of an object based on the time-difference of the received signals [United States Invention 6,119,013 - Maloney et al, September 12, 2000] or by interpreting the characteristics of the received signal [United States Invention 6,127,975 - Maloney et al, October 3, 2000]. In [J. Hightower, G. Borriello, "Location Systems for Ubiquitous Computing", University of Washington, Department of Computer Science and Engineering, 2001] Hightower and Borriello present a comparative description on existing systems. Unfortunately, none of the described systems provides a solution for positioning in ad hoc networks. The Radar system [P. Bahl and V. Padmanabhan, "RADAR: An In-Building RF-based user location and tracking system". Proceedings of the IEEE INFOCOM, vol.2, pp. 775-784, 2000], specifically designed for indoor use, depends on a central computer, performing the calculations, and requires a lot of manual calibration. The work described in [D. Estrin, N. Bulusu and J. Heidemann, GPS-less low-cost outdoor localization for very small devices, IEEE personal communications, ed. October 2000, pp. 28-34, 2000], [R. Want, A. Hopper, V. Falcao and J. Gibbons, "The Active Badge Location System". ACM Transactions on Information Systems, pp. 91-102, 1992], [L. Doherty, K. Pister, and L. El Ghaoui, "Convex position estimation in wireless sensor networks". IEEE Infocom 2001, Anchorage, AK, April 2001] and [Slobodan N. Simic and Shankar Sastry: "Distributed Localization in Wireless Ad Hoc Networks", Department of Electrical Engineering and Computer Sciences, University of California, December 7, 2001] depend on a centrally performed network-wide calculation, and have strict requirements for the infrastructure set-up and/or node placement.

In the inventions mentioned above, the infrastructure required needs to be in direct contact with the object to be localized. Our system is different from all of these systems mainly because we do not require such a direct contact between the infrastructure and the object to be localized. Our invention is based on a distributed algorithm, with minimal dependencies on an established infrastructure. The nodes of the network determine their relative positions to each other by exchanging messages containing estimated distance measurements and estimated positions. The received signal strength (RSSI) of the received messages is used as an indication of the distance to the sending node. A small subset of nodes (minimal 4) will be designated as anchors and will be provided with exact location information (e.g. by attaching GPS positioning devices, etc.).

The system described in [A. Savvides, H. Park, and M. Srivastava, "The bits and flops of the n-hop multilateration primitive for node localization problems". First ACM Int. Workshop on Wireless Sensor Networks and Application (WSNA), pages 112-121, Atlanta, GA, September 2002] describes the multilateration mechanism we apply as well, yet depends on the infrared distance measurement system. The systems described in [C. Savarese, K. Langendoen, and J. Rabaey, "Robust Positioning Algorithms for Distributed Ad-Hoc Wireless Sensor Networks". USENIX technical annual conference, pages 317-328, Monterey, CA, June 2002] on the other hand, are based on similar ranging techniques (i.e. using RSSI), and hardware requirements. The performance of these algorithms in terms of precision and coverage is rather low. The World Intellectual Property Organization WO 02/03091 A2 - Hamdi, et al. *"Method and wireless terminal for generating and maintaining a relative positioning system",* January 2002, present a distributed positioning system, based on possible directions of the coordinate system, does not provide performance results, and is inherently complex.

These current systems have a rather low accuracy and a low coverage (percentage of nodes that know their position). The novelty of our approach consists in the fact that the accuracy of the distance measurements and the accuracy of the calculated position estimates are taken into consideration during the position calculations, which leads to significant improvements in position accuracy.

There are no methods known at the moment that allow a high precision and a high coverage in an ad hoc network that avoids the drawbacks of the prior art.

An aim of the invention is therefore to propose a method for generating and maintaining a relative positioning of wireless devices in an ad hoc network with high accuracy and high coverage. This aim is achieved by a method according to the invention according to claim 1. The way to obtain the position is by distributed processing, in which the devices find their positions within the network area using only the locally available information.

Summary of the invention

The technology described in this invention is applicable to dense networks made up of nodes equipped with range sensing and wireless radio communication capabilities. The method comprises the following steps performed by the wireless devices:

1) measuring the distances between wireless devices and their one-hop neighbours, and 2) using distances together with their estimated accuracy and the accuracy of the (calculated) position of the wireless devices to compute the location of wireless devices. The distance is obtained by measuring at least one characteristic of one signal exchanged between the neighboring wireless devices. Distance or range measurements can be based on different physical variables: received signal strength indication (RSSI), angle of arrival (AOA), time of arrival (TOA), or time-difference of arrival (TDOA) of a signal. RSSI is the prime candidate for range measurements, since this does not require (much) additional hardware or special antennas. A small subset of nodes will be designated as anchors and will be provided with accurate location information (e.g. by attaching GPS positioning devices, etc.).

In order to find out their position, the nodes of the network execute a two-phase algorithm. The two phases are: a *startup phase* (where the nodes get a rough idea of their position) and a *refinement phase* (in which the estimated position converges to a position estimate with sufficient accuracy).

The presented algorithm uses as inputs the known positions of the anchor nodes and the measured (estimated) distance between neighbor nodes. The novelty of our approach consists in the fact that the accuracy of the distance measurements and the accuracy of the calculated position estimates are taken into consideration, which leads to significant improvements in position accuracy and coverage when compared to other algorithms.

In the drawings, that form a part of this specification, we are describing:

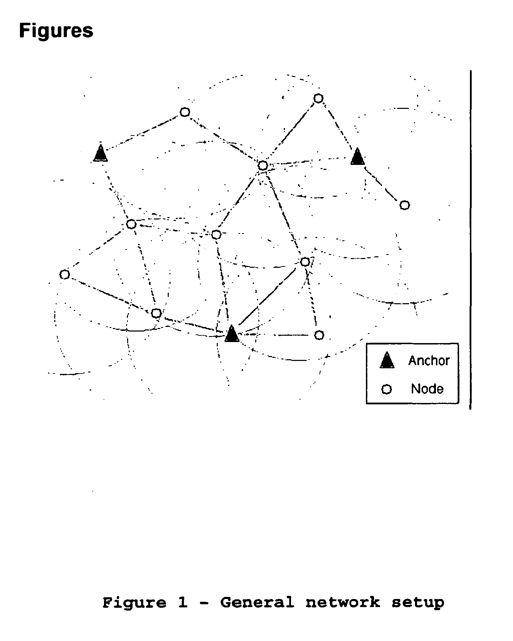

Figure 1 - general network setup;
Figure 2 - pseudo-code description of the protocol;

Detailed description of the invention

*General network setup*

The environment targeted by this invention is one where a large number of randomly placed nodes (represented as filled circles) form a network using the short-range RF transceivers to broadcast messages to only a small subset of the nodes in close enough vicinity to be able to receive those messages. The radio range of each node is shown in the figure as a circle and the connections between neighbors are represented as lines. Nodes that are able to directly communicate with each other will be called neighbors throughout the rest of this invention. The amount of neighbor nodes that each node can reach will be referred to as connectivity from here on.

A small subset of the nodes in the network (called *anchor nodes*), will initially be equipped with information about its own location, expressed by its 2D or 3D coordinates relative to some network-wide coordinate system, either by manual configuration, or by using other location sensing techniques requiring extra hardware, like for example GPS. The anchors are represented as filled triangles in the picture. All other nodes will initially not know their location. Anchor nodes are assumed to have at least similar hardware capabilities. Ideally, the nodes should be spatially distributed equal across the network. When this is not the case, the algorithm could give less accurate results. To minimize on installation and maintenance effort the fraction of anchor nodes in the network should be really small, and the location algorithm should be able to deal with this small amount of anchor nodes. The presented algorithm requires at least 3 anchor nodes for the 2D case and at least 4 anchor nodes for the 3D case, yet is scalable to an unlimited number. Increasing the number of anchor nodes will in general increase the accuracy of the position estimate as well.

*Algorithm description*

Traditional position algorithms are commonly based on triangulation, in which at least three range estimates to anchor neighbors are required. However, due to the preferred small fraction of anchor nodes, in many cases there will be no regular node with at least three anchor nodes as its direct neighbors, allowing it to calculate its own position. These nodes can only indirectly reach anchor nodes via the ad hoc network. In these multi-hop ad hoc network connections, no direct range measurement can be performed between anchor nodes and non-anchor nodes. It is possible though, to obtain a distance estimate to the anchor nodes from all non-anchor nodes, by using the distances measured at the intermediate hops on the shortest path to each anchor. The multi-hop distance can be estimated by multiplying the sum of all single hop measurements by a fixed bias factor. The standard deviation that belongs to the multi-hop distance is computed in the same way. If the distance to at least 3 neighbor nodes is known, as well as the locations of those nodes (for example because they are anchor nodes), the position in 2-dimensional space can be computed using triangulation calculations. A 3-dimensional positioning requires at least 4 positions. Unfortunately, especially in indoors environments, the distances obtained from distance measurement hardware, for example the measured radio signal intensities (RSSI) will be quite imprecise, because of the fading and multi-path effects of the radio signals meeting with the various surfaces in the surroundings of the node. This error can be as large as 100% of the estimated distance. The error of the estimation can be assumed to conform to a Gaussian distributed random variable. As a descriptive value of the error distribution the standard deviation can be used. By itself, with distance errors of this size, the computation through triangulation will contain a large error as well, especially because of the accumulation of the errors in subsequent calculations. This might render the result of the calculation practically useless. However, by using the connectivity of the network, which is usually more than 3 neighbors per node, the redundancy in the network can be exploited to improve on the results of estimating a nodes location. Other factors, such as the known properties of the error distributions, as well as obtaining multiple measurements between pairs of nodes instead of just one, can be taken into account as well to try to obtain a reasonable precision of the computed location.

*Protocol overview*

Nodes with more than the minimally required 3 neighbors (2-D, or 4 neighbors for 3-D) with known position can use an iterative multilateration method [A. Savvides, H. Park, and M. Srivastava, "The bits and flops of the n-hop multilateration primitive for node localization problems". First ACM Int. Workshop on Wireless Sensor Networks and Application (WSNA), pages 112-121, Atlanta, GA, September 2002] to calculate the position with smallest error. In the current invention we extend this method by incorporating the statistical error of the distance measurement. Because of the known or estimated error distribution of the distance measurements, the error of the obtained location can be calculated as well. This can be modeled as a Gaussian distributed random variable, denoting the probability of the real location of the node to be within a certain range of the computed value, expressed with the standard deviation of the error distribution. In other words, the standard deviation serves as a measure of the precision of the location estimation. The calculation that is used to estimate the nodes' position and its accompanying precision is described in [L.Evers, W.Bach, D.Dam, M.Jonker, H.Scholten, and P.Havinga An iterative quality based localization algorithm for adhoc networks Department of Computer Science, University of Twente, 2002].

This newly calculated position, combined with its precision, can now be used in subsequent calculations for other still undetermined nodes. This is done by combining the precision value of the newly located node with the error of the measured range between this node and its neighbor to obtain a total precision value on the distance between the node's real location and its neighbor. When a still undetermined node obtained at least three range measurements to already determined neighbor nodes, it can itself calculate its position. This iterative multilateration can be used again to refine a node's position, when more neighbor nodes have their position calculated, or after the neighbor nodes have obtained refined position estimates.

*Details*

When the localization algorithm starts, usually when the node is switched on, or awakes from a sleep state, a non-anchor node starts by broadcasting an announcement message, indicating its presence and requesting information from nearby nodes. An anchor node directly starts by broadcasting its own position. For its surrounding nodes, this is an indication of its presence as well. Upon receiving an announcement message, a node returns all information currently known to the node that did sent the announcement message. This way, the new node quickly learns the positions of all nearby nodes, and helps the newly connected node to catch up on the current state of the network.

The protocol then continues using a two-phase approach, and relies on two corresponding kinds of messages being passed between the network nodes; *start-up messages* and *refinement messages.* During the start-up phase, a node attempts to calculate an initial position estimate, based on the distances towards the anchors. Start-up messages contain information about the distance and hop count, as well as the position of another node (with known, or at least estimated position) to the sending node. Refinement messages contain the position of the node that sent it.

For all nodes in start-up state, all received messages are stored, until enough distances to nodes with known (or estimated) positions (at least 3 in the 2-dimensional case) are known to be able to estimate its own position. If an estimate can be calculated, the node will proceed to refinement state, and broadcast the position estimate just calculated.

Nodes in refinement state only collect refinement messages from direct neighbors. After receiving a position update from one of its neighbors, the node can re-calculate its own position, based on the new or more precise position just received, together with all other neighbor's positions. As the protocol progresses, nodes update their position estimates 1) based on the improved position estimates of their neighbor nodes, and possibly a neighboring anchor node, and 2) based on improved distance measurements between neighbor nodes. These improved position estimates of the neighbor nodes in their turn, were calculated from the previous estimate of their neighbors. So, in effect, a node's new position is calculated indirectly from its own previous improved estimate. If all nodes recalculate their positions on a similar rate, each node keeps a reliable calculated precision of its position estimate, relative to its neighbors. Allowing a node to re-broadcast only after a certain, network wide, fixed time after the previous position estimate was broadcast, can ensure this.

If a new position estimate is more precise than the previously known location, this new position estimate is broadcast in a refinement message. This strategy ensures finiteness of the algorithm. After each round of message passing, the improvement in calculated precision will be smaller. If a node cannot calculate a sufficiently more precise position, it will not rebroadcast its position. All other nodes will recalculate their positions based on fewer position updates from their neighbors, and the new estimate will be more likely not to be more precise, in which case the node will stop re-broadcasting as well. After a few rounds no node will be able to improve its position estimate, and the algorithm stops.

Anchor nodes already know their position from the start, and will not recalculate it. They only react to announcement messages by re-broadcasting their fixed position.

The accuracy of the estimated distance between two neighbor nodes is improved by using a greater number of range measurements than one. This is for example described by P.C. Chen in "A non-line-of-sight error mitigation algorithm in location estimation", 5th IEEE International Conference on Universal Personal Communications, 1996, pages 316-320. Each message received also provides a distance measurement that can be used to calculate a running average to increase the accuracy of the distance estimate. This works well if the corresponding set of nodes is static. If the network is dynamic, the mobile nodes can detect this easily, since most likely more than one connection will have been changed, and give a different distance measurement. Once a node detects it is moving, the node will enter initialization phase again.

A further detailed description will be given below.

If the distance to at least 3 neighbor nodes is known, as well as the locations of those nodes (for example because they are anchor nodes), the position in 2-dimensional space can be computed using triangulation calculations. Unfortunately, especially in indoors environments, the distances obtained from the measured RSSI will be quite imprecise, because of the fading and multi-path effects of the radio signals meeting with the various surfaces in the surroundings of the node. This error can be as large as 50% of the measured distance. The error of the measurement does however conform to a Gaussian distributed random variable. As a descriptive value of the error distribution the standard deviation can be used. For maximum errors of 50% this means standard deviation of about 20% of the distance. This value will be referred to further on as $\eta$. Different environments with other error characteristics will result in different (possibly smaller) values of $\eta$.

By itself, with distance errors of this size, the computation through triangulation will contain a large error as well, especially because of the accumulation of the errors in subsequent calculations. This might render the result of the calculation practically useless. However, by using the connectivity of the network, which is usually more than 3 neighbors per node, the redundancy in the network can be exploited to improve on the results of estimating a nodes location. Other factors, such as the known properties of the error distributions, as well as obtaining multiple measurements between pairs of nodes instead of just one, can be taken into account as well to try to obtain a reasonable precision of the computed location.

For nodes with more than the minimally required 3 neighbors with known position, the "iterative multilateration" method, can be used to calculate the position with smallest error. Because of the known error distribution of the distance measurements, the error of the obtained location can be calculated as well. This can be modeled as a Gaussian distributed random variable, denoting the probability of the real location of the node to be within a certain range of the computed value, expressed with the standard deviation of the error distribution. In other words, the standard deviation serves as a measure of the precision of the location estimation. This newly calculated position, combined with its precision, can now be used in subsequent calculations for other still undetermined nodes. This is done by combining the precision value of the newly located node with the error of the measured range between this node and its neighbor to obtain a total precision value on the distance between the node's real location and its neighbor. When a still undetermined node obtained at least three range measurements to already determined neighbor nodes, it can itself calculate its position. The precise calculations involved in this process will be described hereafter. This iterative multilateration can be used again to refine a node's position, when more neighbor nodes have their position calculated, or after the neighbor nodes have obtained refined position estimates. Because a precision value of a node's initial position is known in the scenario described above, initial position estimates of non-anchor nodes can be used to calculate a position estimate of undetermined nodes as well. When a possibly very imprecise (with large standard deviation value) location estimate is used in subsequent estimation calculations, the large error is accumulated in the results of the new calculation. Though, this result is provided together with an even larger standard deviation of the position error meaning that the lower accuracy is provided with the result of calculation.

The problem that still arises is that at the start of the location discovery algorithm, only the anchor nodes will have a known location (with infinitely high precision). Because of the small fraction of anchor nodes, in many cases there will be no non-anchor node with at least three anchor nodes as its direct neighbors, allowing it to calculate its own position. To almost all non-anchor nodes the anchors are several hops away, and no direct range measurements can be obtained. In such situations no positioning can be achieved. It is possible though, to obtain a distance to the anchor nodes from all non-anchor nodes, by using the distances measured at the intermediate hops on the shortest path to each anchor. The multi-hop distance can be obtained by multiplying the sum of all single hop measurements by a precomputed bias factor. The standard deviation that belongs to the multi-hop distance is computed in the same way. The calculations of a nodes position from a set of range measurements between the node with unknown position and a set of nodes with known or estimated positions can be performed in a way similar to that of GPS and the "iterative multilateration". The main difference with those systems and the invention is that the precision estimates of all data values, expressed as a standard deviation of the error distribution, are also taken into account in the whole calculation. Starting from an initial estimation, an improvement vector is calculated iteratively and added to the previous estimation until the improvement vector is smaller than a certain value. This vector is obtained through a weighted least squares estimation:

$$wAx = wb \qquad\qquad (1)$$

where $w$ is a weight factor, $A$ is a matrix, and $x$ and $b$ are vectors.

To calculate the improvement vector we take the true position of the node to ve calculated as $x = (x;y)$ for a 2-dimensional system, or $x = (x;y;z)$ in the 3-dimensional case. The initial estimation of the position is denoted as $x^{est}$ and the positions of the $n$ neighbour nodes as $x_i$, for $i = 1..n$. The measured ranges to those nodes can be denoted as: $r_i = \|x_i - x\| + \varepsilon_i$, $i = 1..n$, with $\varepsilon_i$ denoting the measurement error, and the node's true position as : $x = x^{est} + \delta x$.

In the same way, the distances to the estimated position are: $r^{est} = \|x_i - x^{est}\|$, $i = l..n$ and

$$\delta r_i = r_i - r_i^{est} = \|\mathbf{x_i} - \mathbf{x^{est}} - \delta\mathbf{x}\| - \|\mathbf{x_i} - \mathbf{x^{est}}\| + \epsilon_i$$

$$\delta r_i \approx -\frac{(\mathbf{x_i} - \mathbf{x^{est}})}{\|\mathbf{x_i} - \mathbf{x^{est}}\|} \cdot \delta\mathbf{x} + \epsilon_i = \mathbf{1}_i \cdot \delta\mathbf{x} + \epsilon_i, \, i = 1..n \tag{2}$$

with $1_{li}$ the direction vector of length I from the nodes estimated position to node $i$.

For each range measurement $\Upsilon_i$ a weight $w_i = 1/\sqrt{\sigma_i^{edge2} + \sigma_i^{node2}}$ is culated, where $\sigma_i^{edge2}$ is the variance of the range measurement to node $i$, and $\sigma_i^{node2}$ is the variance of the position of the node $i$.

Matrix A consists of n rows, each filled with the direction vector $1_i$, one for each anchor node involved in the calculation. Vector b is constructed as a column vector filled with the values $\delta r_i$, one for each anchor node. Note that the *i'th* row of the matrix $A$ needs to correspond with the *i'th* row of vector b with respect to the anchor node the values are calculated off. The least squares solution of equation (1) will then look like this:

$$\begin{bmatrix} \mathbf{1_1} \cdot w_1 \\ \vdots \\ \mathbf{1_n} \cdot w_n \end{bmatrix} \cdot [\delta\mathbf{x}] = \begin{bmatrix} \delta r_1 \cdot w_1 \\ \vdots \\ \delta r_n \cdot w_n \end{bmatrix} \tag{3}$$

This way the improvement ($\delta x$ is calculated. In general, the least squares solution of $x$ for $Ax = x$ is: $x = A \cdot C \cdot b^T$ where $C = (A^T \cdot A)^{-1}$.

Using covariance matrix $C$, a square matrix with the number of rows and columns equal to the dimensionality of the system, the node's standard deviation is calculated as:

$$\sigma^{node} = \sqrt{\frac{1}{2} \sum_i \sum_j C_{i,j}} \tag{4}$$

When the estimated position of the nodes is calculated like this, the optimal location will be calculated, based on the given ranges to and positions of the neighbor nodes.

Calculation of the distance between two nodes A and B that are connected only by a path of more than one hop can be performed indirectly. On each hop along the shortest path between the nodes, the range and corresponding standard deviation are measured. An estimation of the distance and precision between A and B can be made, however, by taking the sum of all these ranges. The distance calculated this way, called $r_m$ will usually be larger than the true distance between the two nodes, and the standard deviation will be larger than the summed single-hop standard deviations $\sigma_m$, because of the error introduced by the less precise calculated distances. A better estimation of those values can be made, however, by statistically analysing large sets of these summed measurements.

Every measured summed distance $r_m$ can be seen as a sample of a random variable $R_{rm}$. If this variable is of Gaussian distribution, it serves as a good bases to obtain estimation of the actual distance. The expected value of $R_{rm}$ is the mean of the distribution, $E(R_{rm}) = \mu_R$. Normalizing $R_{rm}$ by the measured distance $r_m$ results in a normalized random variable $Q = R_{rm}/r_m$ for all values of $r_m$ measured along paths with equal number of hops, from which the estimated value of the true distance $r_t$ can be calculated as: $r^{est} = \mu Q \cdot r_m$. The error between the measured distance and the estimated true distance $\varepsilon_{rm} = r_m - r^{est}$ can, in the same way, be seen as a sample of the random variable $S_{rm}$.

The standard deviation $\sigma_S$ of $S_{rm}$ is the precision of the estimated distance $r^{est}$.

A normalized random variable T is defined as having samples $\varepsilon_{T'}$ obtained by dividing all samples $\varepsilon_{rm}$ by the expected error $\eta$ on the true distance $r_t$:

$$\epsilon_T = \frac{(r_m - r^{est})}{r_t \cdot \eta}.$$

The expected error $\eta$ is an environment and hardware dependent value of the range measurement error (given as a percentage of the range). From the standard deviation $\sigma_T$ of $T$ the precision of the estimated true range $r^{est}$ can now be calculated from $\sigma_m$ and $\sigma_T$ as : $\sigma^{est} = \sigma_m \cdot \sigma_T \cdot \mu_Q$.

The values for $\sigma_T$ and $\mu_Q$ can be calculated offline, and stored in a table, containing one set of ($\sigma_T$, $\mu_Q$) values for all possible hop lengths of the shortest hop paths between any pair of nodes. These values for single hop paths (for nodes that are each others direct neighbors) will of course be (1,1). The value of $\sigma_T$ does depend on the $\eta$, so for different values of $\eta$ another table will have to be used. This value does however only depend on the hardware and environment used for the network, which will be known before deployment of the network, so only one table will have to be stored or in active use throughout the whole localization calculation.

The network communication model used in the example makes use only of local broadcasts, where messages are delivered to all nodes within a certain fixed range from the sending node. Colliding transmissions and message corruption are abstracted from (it is assumed that lower network layers will be in charge of providing a reliable broadcast service). The positions of all nodes are fixed.

During network initialization a number of nodes is selected as anchor nodes. The anchors are selected in a grid-like structure, where the nodes closest to the points of the grid will be chosen to be anchors. The grid is of size $s \times s$, $s \leq N$ with $N$ the number of anchor nodes, and s the largest number that still satisfies the inequality. The rest of the anchors are selected randomly from the remaining nodes. This way of selecting the anchor nodes is chosen because it provides a more or less equal environment for all nodes, where the closest anchors will always be a certain maximum distance away. It is beneficent as well for the performance of the algorithm, because it proves difficult to obtain a correct estimation of a node's position if it is not surrounded by anchor nodes.

The distance measurements between nodes can be calculated, for example from the signal strength of a transmission. This means that every received message also provides a range indication between itself and the sending node.

In the example the range measurement including error is modelled by drawing a random value from a Gaussian distribution with the true range as its mean, and a standard deviation of $\eta \cdot true\ range$. The implementation of the algorithm records all range measurements from each message it receives, and uses the average distance measured to a neighbor node in all further calculations. This way, as more messages are received, the measured distance will converge to an ever more constant value, which leads to better position estimates during refinement.

The protocol uses a two-phase approach, and relies on two corresponding kinds of messages being passed between the network nodes; start-up messages and refinement messages. During the start-up phase, a node attempts to calculate an initial position estimates, based on the distances towards the anchors. This initial position will then be improved to get a more accurate estimate during the refinement phase.

Start-up messages contain information about the distance and hop count, as well as the position of another node (with known, or at least estimated position) to the sending node. Refinement messages contain the position of the node that sent it. When the localization algorithm starts, usually when the node is switched on, or awakes from a sleep state, a non-anchor node starts by broadcasting an announcement message, indicating its presence and requesting for information from nearby nodes. On activation, an anchor node directly starts by broadcasting its own position. For its surrounding nodes, this is an indication of its presence as well. Upon receiving an announcement message, a node broadcasts all information currently known to that node. This way, the new node quickly learns the positions of all nearby nodes, and helps the newly connected node to catch up on the current state of the network. For all nodes in start-up state, all received messages with hop count lower than the maximum are stored, until enough distances (at least 3 in the 2-dimensional simulation) are known to be able to calculate its own position estimate. If an estimate can be calculated, the node will proceed to refinement state, and broadcast the position estimate just calculated.

Nodes in refinement state only collect refinement messages from direct neighbors. After receiving a position update from one of its neighbors, the node can re-calculate its own position, based on the new or more precise position just received, together with all other neighbor's positions. If this new position estimate is more precise than the previously known location (smaller $\sigma$), this new position estimate is broadcast in a refinement message. This strategy ensures finiteness of the algorithm. After each round of message passing, the improvement in calculated precision will be smaller. If a node cannot calculate a more precise position update, it will not rebroadcast its position. All other nodes will recalculate their positions based on fewer position updates from their neighbors, and the new estimate will be more likely not to be more precise, in which case the node will stop re-broadcasting as well. After a few rounds no node will be able to improve its position estimate, and the algorithm stops.

As the protocol progresses, nodes update their position estimates based on the improved position estimates of their neighbor nodes, and possibly a neighboring anchor node. These improved position estimates of the neighbor nodes in their turn, were calculated from the previous estimate of their neighbors. So, in effect, a nodes new position is calculated indirectly from its own previous improved estimate. It is important that all nodes recalculate their positions on a similar rate, so ensure each node keeps a reliable calculated precision of its position estimate, relative to it's neighbors. This is ensured by allowing a node to re-broadcast only after a certain, network wide, fixed time after the previous position estimate was broadcast. This also keeps the number of broadcasts low.

Anchor nodes already know their position from the start. Because their position is obtained in a way external to this algorithm, they do not recalculate it. As a result, for the majority of the time, they can be silent, and only react to announcement messages by rebroadcasting their fixed position. The precision of anchor nodes positions is obtained externally as well, and can be much greater than possible to achieve with the calculations of this localization algorithm. In the simulations, the anchor nodes precision is set to be infinitely high.

## Claims

1. Method for determining a position of a non-anchor node (●) in an ad-hoc network comprising at least one anchor node (▲) having a predetermined location and being initially equipped with information about its own location and a number of non-anchor nodes which initially not know their location, said nodes being equipped with range sensing and wireless communication capabilities, said method comprising the steps of:

   - determining the distance from a first node, being a non-anchor node, to a second node, being an adjacent non-anchor node or an adjacent anchor node;
   - retrieving information about the location of the second node;
   - calculating the location of the first node based on the retrieved location of the second node and the determined distance from the first node to the second node said nodes being equipped with wireless devices, **characterised in that** the method comprises the following steps performed by the wireless devices:

     1) combining the calculated location information with the calculated location accuracy information
     2) measuring the distances between wireless devices and their one-hop neighbors, and
     3) using said distances together with their estimated accuracy and the accuracy of the calculated positions of the wireless devices to compute the locations of wireless devices, wherein **in that** the accuracy information is selected from the group comprising:

        - the standard deviation of the distribution of the error of the location;
        - the variance of the distribution of the error of the location;
        - a set of numbers, denoting the error probability as estimated for different locations.

2. Method according to claim 1, wherein the network is a wireless network and wherein the distance from the first node to the second node is determined from a property of the wireless communication signal.

3. Method according to claim 2, wherein the property of the wireless communication signal is selected from the group comprising:

   - the time of arrival (TOA) of the wireless communication signal;
   - the angle of arrival (AOA) of the wireless communication signal;
   - the signal attenuation caused by messages received during wireless communication;
   - the time difference of arrival (TDOA) of two signals based on a different transmission mechanism, e.g. a radio signal and an audio signal, both sent from one of the nodes.

4. Method according to any of the preceding claims, wherein said measured distances are associated with numerical information describing the precision of the distance measurement.

5. Method according to claim 4, wherein said precision information is selected from the group comprising:

- the variance of the error distribution of said distance measurements;
- the standard deviation of the error distribution of said distance measurements;
- a set of numbers, denoting the distance error probability as estimated for different distances.

6.  Method according to claim 5, further comprising the step of storing a number of distance measurements for said first node in order to improve the accuracy of the measurement of the distance towards the second node.

7.  Method according to any of the preceding claims, wherein the location of non-anchor nodes and anchor nodes is expressed as coordinates in a global coordinate system, that is used by all of the nodes.

8.  Method according to claim 7, wherein the location is expressed as a set of coordinates in a two-dimensional (2D) coordinate system.

9.  Method according to claim 7, wherein the location is expressed as a set of coordinates in a three-dimensional (3D) coordinate system.

10.  Method according to claim 1, wherein said nodes transmit location and precision accompanied with a token uniquely identifying the node positioned at said position over wireless radio link.

11.  Method according to claim 1, wherein said nodes transmit location information accompanied by information on the distance from the sending node towards the node with the indicated position.

12.  Method of one of claims 10 or 11, wherein said nodes transmit the position information accompanied by information on the distance from the sending node towards the node with the indicated position, this distance being estimated from a multiple of distance measurements, being done between nodes, which together can form a path of communication over multiple hops from the sending node towards the node with the indicated position.

13.  Method according to one of the claims 11 or 12, wherein the nodes calculate their position after obtaining a minimal number of positions of, and distances measurements towards, anchor nodes.

14.  Method according to claim 13, wherein the positions of said anchor nodes are expressed as coordinates in a two-dimensional (2D) coordinated system, and wherein the minimal number of positions is three.

15.  Method according to claim 13, wherein the positions of said anchor nodes are expressed as coordinates in a three-dimensional (3D) coordinate system, and wherein the minimal number of positions is four.

16.  Method according to one of claims 14 or 15, wherein a node re-calculates its own position when a number greater than the minimum of positions of and distances towards said anchors are obtained, in order to obtain a more accurate estimation of the position of said node.

17.  The method according to claim 16, wherein a node re-calculates its own position when a change in distance towards, or position estimation of, any of the anchor nodes is detected.

18.  The method according to claim 16, wherein a node re-calculates its own position when a position estimation of another node is received across the wireless communications link, in order to improve the accuracy of said position estimation.

19.  Method according to any of the previous claims, where said wireless communications link is realized using a non-proprietary communications standards and mechanisms; selected from the group consisting of:

- wireless local area network standards, among which HiperLAN and IEEE 802.11;
- wireless personal area networks standards, among which IEEE 802.15.x;
- Bluetooth;
- GSM, UMTS, ZigBee;
- any infrared communications protocol, among which IrDA;
- Ultra Wide Band (UWB) radio communication.

EP 1 617 601 B1

**Patentansprüche**

1. Verfahren zum Bestimmen einer Position eines Nichtankerknotens (●) in einem Ad-hoc-Netzwerk, da zumindest einen Ankerknoten (▲) mit einer vorbestimmten Position, der anfänglich mit einer Information über seine eigene Position versehen ist, und eine Anzahl von Nichtankerknoten enthält, die anfänglich ihre Position nicht kennen, wobei diese Knoten mit Bereichsmess- und Drahtloskommunikationsfähigkeiten versehen sind, wobei das Verfahren die Schritte enthält:

   - Ermitteln des Abstands von einem ersten Knoten, der ein Nichtankerknoten ist, zu einem zweiten Knoten, der ein benachbarter Nichtankerknoten oder ein benachbarter Ankerknoten ist,
   - Abfragen von Information über die Position des zweiten Knotens, und
   - Berechnen der Position des ersten Knotens basierend auf der abgefragten Position des zweiten Knotens und dem ermittelten Abstand zwischen dem ersten Knoten und dem zweiten Knoten,

   wobei die Knoten mit Drahtlosvorrichtungen versehen sind,
   **dadurch gekennzeichnet, dass** das das Verfahren die folgenden Schritte enthält, die durch die Drahtlosvorrichtungen durchgeführt werden:

   1) Kombinieren der berechneten Positionsinformation mit der berechneten Positionsgenauigkeitsinformation,
   2) Messen der Abstände zwischen den Drahtlosvorrichtungen und ihren Ein-Hop-Nachbarn und
   3) Verwenden der Abstände zusammen mit ihrer abgeschätzten Genauigkeit und der Genauigkeit der berechneten Positionen der Drahtlosvorrichtungen zum Berechnen der Positionen der Drahtlosvorrichtungen,

   wobei die Genauigkeitsinformation gewählt ist aus der Gruppe, die enthält:

   - die Standardabweichung der Fehlerverteilung der Position,
   - die Varianz der Fehlerverteilung der Position,
   - einen Satz von Zahlen, die die Fehlerwahrscheinlichkeit bezeichnen, wie sie für verschiedene Positionen abgeschätzt ist.

2. Verfahren gemäß Anspruch 1, bei dem
   das Netzwerk ein Drahtlosnetzwerk ist und
   der Abstand zwischen dem ersten Knoten und dem zweiten Knoten aus einer Eigenschaft des Drahtloskommunikationssignals berechnet wird.

3. Verfahren gemäß Anspruch 2, bei dem die Eigenschaft des Drahtloskommunikationssignals gewählt ist aus der Gruppe, die enthält:

   - die Ankunftszeit (TOA) des Drahtloskommunikationssignals,
   - den Ankunftswinkel (AOA) des Drahtloskommunikationssignals,
   - die Signaldämpfung, die durch während der Drahtloskommunikation empfangene Nachrichten bewirkt wird,
   - die Ankunftszeitunterschiede (TDOA) zweier Signale basierend auf einem unterschiedlichen Übertragungsmechanismus, z.B. einem Funksignal und einem Audiosignal, die beide von einem der Knoten gesendet werden.

4. Verfahren gemäß einem der vorigen Ansprüche, bei dem den gemessenen Abständen numerische Informationen zugeordnet werden, die die Genauigkeit der Abstandsmessung beschreiben.

5. Verfahren gemäß Anspruch 4, bei dem die Genauigkeitsinformation aus der Gruppe gewählt ist, die enthält:

   - die Varianz der Fehlerverteilung der Abstandsmessungen,
   - die Standardabweichung der Fehlerverteilung der Abstandsmessungen,
   - einen Satz von Zahlen, die die Abstandsfehlerwahrscheinlichkeit bezeichnen, wie sie für verschiedene Abstände abgeschätzt ist.

6. Verfahren gemäß Anspruch 5, das weiter den Schritt enthält des Speicherns einer Anzahl von Abstandsmessungen für den ersten Knoten, um die Genauigkeit der Messung des Abstands zu dem zweiten Knoten zu verbessern.

7. Verfahren gemäß einem der vorigen Ansprüche, bei dem die Position der Nichtankerknoten und Ankerknoten als Koordinate in einem globalen Koordinatensystem ausgedrückt wird, das von allen Knoten verwendet wird.

8. Verfahren gemäß Anspruch 7, bei dem die Position als Satz von Koordinaten in einem zweidimensionalen (2D) Koordinatensystem ausgedrückt wird.

9. Verfahren gemäß Anspruch 7, bei dem die Position als Satz von Koordinaten in einem dreidimensionalen (3D) Koordinatensystem ausgedrückt wird.

10. Verfahren gemäß Anspruch 1, bei dem die Knoten die Position und die Genauigkeit zusammen mit einem Token übertragen, der den Knoten, der an dieser Position angeordnet ist, eindeutig über Drahtlosfunkverbindung identifiziert.

11. Verfahren gemäß Anspruch 1, bei dem die Knoten die Positionsinformation zusammen einer Information über den Abstand von dem sendenden Knoten zu dem Knoten mit der angegebenen Position übertragen.

12. Verfahren gemäß Anspruch 10 oder 11, bei dem
die Knoten die Positionsinformation zusammen einer Information über den Abstand von dem sendenden Knoten zu dem Knoten mit der angegebenen Position übertragen,
wobei dieser Abstand aus einer Mehrzahl von Abstandsmessungen abgeschätzt wird, die zwischen Knoten ausgeführt werden, die zusammen einen Kommunikationspfad über mehrere Hops von dem sendenden Knoten zu dem Knoten mit der angegebenen Position bilden.

13. Verfahren gemäß Anspruch 11 oder 12, bei dem die Knoten ihre Positionen berechnen, nachdem sie eine minimale Anzahl von Positionen von und Abstandsmessungen zu Ankerknoten erhalten haben.

14. Verfahren gemäß Anspruch 13, bei dem
die Positionen der Ankerknoten als Koordinaten in einem zweidimensionalen (2D) Koordinatensystem ausgedrückt werden und
die minimale Anzahl von Positionen drei ist.

15. Verfahren gemäß Anspruch 13, bei dem
die Positionen der Ankerknoten als Koordinaten in einem dreidimensionalen (3D) Koordinatensystem ausgedrückt werden und
die minimale Anzahl von Positionen vier ist.

16. Verfahren gemäß Anspruch 14 oder 15, bei dem ein Knoten seine eigene Position neu berechnet, wenn eine Anzahl, die größer als die minimale Anzahl von Positionen von und Abstandsmessungen zu Ankerknoten ist, erhalten wird, um eine genauere Abschätzung der Position dieses Knotens zu erzielen.

17. Verfahren gemäß Anspruch 16, bei dem ein Knoten seine eigene Position neu berechnet, wenn eine Änderung eines Abstands zu oder einer Positionsabschätzung von einem beliebigen der Ankerknoten erfasst wird.

18. Verfahren gemäß Anspruch 16, bei dem ein Knoten seine eigene Position neu berechnet, wenn eine Positionsabschätzung eines anderen Knotens über die Drahtloskommunikationsverbindung empfangen wird, um die Genauigkeit der Positionsabschätzung zu verbessern.

19. Verfahren gemäß einem der vorigen Ansprüche, bei dem die Drahtloskommunikationsverbindung verwirklicht ist unter Verwendung von nicht proprietären Standards und Mechanismen, die gewählt sind aus der Gruppe, die besteht aus:

- Wireless-Local-Area-Network-Standards, darunter HiperLAN und IEEE 802.11,
- Wireless-Personal-Area-Network-Standards, darunter IEEE 802.15.x,
- Bluetooth,
- GSM, UMTS, ZigBee
- ein beliebiges Infrarotkommunikationsprotokoll, darunter IrDA
- Ultra-Breitband-Funkkommunikation (UWB).

**Revendications**

1. Procédé pour déterminer une position d'un noeud non-ancre (●) dans un réseau ad-hoc comprenant au moins un noeud ancre (▲) ayant une localisation prédéterminée et étant initialement équipé d'informations concernant sa propre localisation et un nombre de noeuds non-ancres qui ne connaissent pas initialement leur localisation, lesdits noeuds étant équipés de capacités de détection de portée et de communication sans fil, ledit procédé comprenant les étapes consistant à :

   - déterminer la distance d'un premier noeud, qui est un noeud non-ancre, à un deuxième noeud, qui est un noeud non-ancre adjacent ou un noeud ancre adjacent ;
   - récupérer des informations concernant la localisation du deuxième noeud;
   - calculer la localisation du premier noeud sur la base de la localisation récupérée du deuxième noeud et de la distance déterminée du premier noeud au deuxième noeud, lesdits noeuds étant équipés de dispositifs sans fil,

   **caractérisé en ce que** le procédé comprend les étapes suivantes effectuées par les dispositifs sans fil :

   1) combiner les informations de localisation calculées avec les informations de précision de localisation calculées,
   2) mesurer les distances entre dispositifs sans fil et leurs voisins d'un bond, et
   3) utiliser lesdites distances conjointement avec leur précision estimée et la précision des positions calculées des dispositifs sans fil pour calculer les localisations de dispositifs sans fil, dans lequel les informations de précision sont sélectionnées dans le groupe comprenant :

      - l'écart-type de la distribution de l'erreur de la localisation ;
      - la variance de la distribution de l'erreur de la localisation ;
      - un ensemble de nombres, indiquant la probabilité d'erreur telle qu'estimée pour des localisations différentes.

2. Procédé selon la revendication 1, dans lequel le réseau est un réseau sans fil et dans lequel la distance du premier noeud au deuxième noeud est déterminée à partir d'une propriété du signal de communication sans fil.

3. Procédé selon la revendication 2, dans lequel la propriété du signal de communication sans fil est sélectionnée dans le groupe comprenant :

   - le temps d'arrivée (TOA) du signal de communication sans fil ;
   - l'angle d'arrivée (AOA) du signal de communication sans fil ;
   - l'affaiblissement du signal causé par des messages reçus pendant la communication sans fil ;
   - la différence de temps d'arrivée (TDOA) de deux signaux sur la base d'un mécanisme de transmission différent, par exemple un signal radio et un signal audio, les deux envoyés depuis un des noeuds.

4. Procédé selon l'une quelconque des revendications précédentes, dans lequel lesdites distances mesurées sont associées à des informations numériques décrivant l'exactitude de la mesure de distance.

5. Procédé selon la revendication 4, dans lequel lesdites informations d'exactitude sont sélectionnées dans le groupe comprenant :

   - la variance de la distribution des erreurs desdites mesures de distance ;
   - l'écart-type de la distribution des erreurs desdites mesures de distance ;
   - un ensemble de nombres, indiquant la probabilité d'erreur de distance telle qu'estimée pour des distances différentes.

6. Procédé selon la revendication 5, comprenant en outre l'étape consistant à stocker un nombre de mesures de distance pour ledit premier noeud afin d'améliorer la précision de la mesure de la distance vers le deuxième noeud.

7. Procédé selon l'une quelconque des revendications précédentes, dans lequel la localisation de noeuds non-ancres et de noeuds ancres est exprimée comme coordonnées dans un système de coordonnées global, qui est utilisé par tous les noeuds.

8. Procédé selon la revendication 7, dans lequel la localisation est exprimée comme un ensemble de coordonnées dans un système de coordonnées bidimensionnel (2D).

9. Procédé selon la revendication 7, dans lequel la localisation est exprimée comme un ensemble de coordonnées dans un système de coordonnées tridimensionnel (3D).

10. Procédé selon la revendication 1, dans lequel lesdits noeuds transmettent la localisation et l'exactitude accompagnées d'un jeton identifiant de manière unique le noeud positionné au niveau de ladite position sur la liaison radio sans fil.

11. Procédé selon la revendication 1, dans lequel lesdits noeuds transmettent des informations de localisation accompagnées d'informations sur la distance depuis le noeud émetteur vers le noeud avec la position indiquée.

12. Procédé selon l'une des revendications 10 ou 11, dans lequel lesdits noeuds transmettent les informations de position accompagnées d'informations sur la distance depuis le noeud émetteur vers le noeud avec la position indiquée, cette distance étant estimée à partir d'un multiple de mesures de distance, qui est effectué entre des noeuds, qui ensemble peuvent former un trajet de communication sur de multiples bonds depuis le noeud émetteur vers le noeud avec la position indiquée.

13. Procédé selon l'une des revendications 11 ou 12, dans lequel les noeuds calculent leur position après l'obtention d'un nombre minimal de positions de, et de mesures de distances vers, des noeuds ancres.

14. Procédé selon la revendication 13, dans lequel les positions desdits noeuds ancres sont exprimées comme coordonnées dans un système de coordonnées bidimensionnel (2D), et dans lequel le nombre minimal de positions est trois.

15. Procédé selon la revendication 13, dans lequel les positions desdits noeuds ancres sont exprimées comme coordonnées dans un système de coordonnées tridimensionnel (3D), et dans lequel le nombre minimal de positions est quatre.

16. Procédé selon l'une des revendications 14 ou 15, dans lequel un noeud recalcule sa propre position lorsqu'un nombre supérieur au minimum de positions de et de distances vers lesdites ancres est obtenu, afin d'obtenir une estimation plus précise de la position dudit noeud.

17. Procédé selon la revendication 16, dans lequel un noeud recalcule sa propre position lorsqu'un changement de la distance vers, ou de l'estimation de position de, l'un quelconque des noeuds ancres est détecté.

18. Procédé selon la revendication 16, dans lequel un noeud recalcule sa propre position lorsqu'une estimation de position d'un autre noeud est reçue à travers la liaison de communications sans fil, afin d'améliorer la précision de ladite estimation de position.

19. Procédé selon l'une quelconque des revendications précédentes, où ladite liaison de communications sans fil est réalisée en utilisant des normes et des mécanismes de communications non propriétaires ; sélectionnés dans le groupe constitué par :

    - des normes de réseau local sans fil, parmi lesquelles HiperLAN et IEEE 802.11 ;
    - des normes de réseau personnel sans fil, parmi lesquelles IEEE 802.15.x;
    - Bluetooth ;
    - GSM, UMTS, ZigBee ;
    - tout protocole de communications infrarouges, parmi lesquels IrDA ;
    - la communication radio ultralarge bande (UWB).

# Figures

Figure 1 - General network setup

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5317323 A
- US 6542083 B, Richley
- US 6603428 B, Stilp
- US 6316934 B, Amorai-Moriya
- US 6259991 B, Nysen
- US 6292744 B, Want
- US 6119013 A, Maloney
- US 6127975 A, Maloney
- WO 0203091 A2, Hamdi

### Non-patent literature cited in the description

- Relative location in wireless networks. **PATWARI et al.** Connecting the mobile world: proceedings / IEEE VTS 53RD Vehicular Technology Conference. Spring, 2001
- **J. HIGHTOWER ; G. BORRIELLO.** Location Systems for Ubiquitous Computing. *University of Washington, Department of Computer Science and Engineering,* 2001
- **P. BAHL ; V. PADMANABHAN.** RADAR: An In-Building RF-based user location and tracking system. *Proceedings of the IEEE INFOCOM,* 2000, vol. 2, 775-784
- GPS-less low-cost outdoor localization for very small devices. **D. ESTRIN ; N. BULUSU ; J. HEIDEMANN.** IEEE personal communications. October 2000, 28-34
- **R. WANT ; A. HOPPER ; V. FALCAO ; J. GIBBONS.** The Active Badge Location System. ACM Transactions on Information Systems, 1992, 91-102
- **L. DOHERTY ; K. PISTER ; L. EL GHAOUI.** Convex position estimation in wireless sensor networks. *IEEE Infocom 2001, Anchorage, AK,* April 2001
- **SLOBODAN N. SIMIC ; SHANKAR SASTRY.** Distributed Localization in Wireless Ad Hoc Networks. *Department of Electrical Engineering and Computer Sciences, University of California,* 07 December 2001
- **A. SAVVIDES ; H. PARK ; M. SRIVASTAVA.** The bits and flops of the n-hop multilateration primitive for node localization problems. *First ACM Int. Workshop on Wireless Sensor Networks and Application (WSNA,* September 2002, 112-121
- **C. SAVARESE ; K. LANGENDOEN ; J. RABAEY.** Robust Positioning Algorithms for Distributed Ad-Hoc Wireless Sensor Networks. *USENIX technical annual conference,* June 2002, 317-328
- **L.EVERS ; W.BACH ; D.DAM ; M.JONKER ; H.SCHOLTEN ; P.HAVINGA.** An iterative quality based localization algorithm for adhoc networks. *Department of Computer Science,* 2002
- **P.C. CHEN.** A non-line-of-sight error mitigation algorithm in location estimation. *5th IEEE International Conference on Universal Personal Communications,* 1996, 316-320